# EUROPÄISCHE PATENTSCHRIFT

(11) **EP 0 810 136 B1**
(45) Veröffentlichungstag und Bekanntmachung des Hinweises auf die Patenterteilung: **05.09.2001**
(21) Anmeldenummer: 97105708.8
(22) Anmeldetag: 07.04.1997
(51) Int. Cl.: B60T 11/32, F15B 21/08, F15B 20/00

(54) **Druckmittelanlage**
Pressure installation
Installation sous pression

(30) Priorität: 01.06.1996 DE 19622095
(43) Veröffentlichungstag der Anmeldung: 03.12.1997
(73) Patentinhaber: WABCO GmbH & Co. OHG, 30453 Hannover (DE)
(72) Erfinder: Bornhof, Hans-Ulrich, 30938 Grossburgwedel (DE); Rieck, Uwe, 31246 Lahstedt (DE); Diekmeyer, Heinrich, 30890 Barsinghausen (DE); Wirth, Andreas, 31029 Banteln (DE)
(74) Vertreter: Schrödter, Manfred, Dipl.-Ing.

(56) Entgegenhaltungen:
- EP-A- 0 031 082
- EP-A- 0 263 669
- EP-A- 0 277 602
- DE-A- 3 513 967
- DE-C- 4 109 741
- FR-A- 1 526 066
- SOVIET PATENT ABSTRACTS Section PQ, Week 9341 Derwent Publications Ltd., London, GB; Class Q57, AN 93-326581 XP002041239 & SU 1 765 545 A (MOSC LIKHACHEV CAR WKS) , 30.September 1992
- SOVIET PATENT ABSTRACTS Section PQ, Week 9428 Derwent Publications Ltd., London, GB; Class Q42, AN 94-232575 XP002041240 & SU 1 810 616 A (CHELY SECT NATI SCI PRODN ASSOC) , 23.April 1993

## Beschreibung

Die Erfindung betrifft eine Druckmittelanlage gemäß dem Oberbegriff des Patentanspruchs 1.

Eine derartige Druckmittelanlage ist aus der EP 0 263 669 B1 bekannt.

Die bekannte Druckmittelanlage zur Versorgung von mehreren Druckmittelkreisen mit einem Druckmittel weist als Druckmittelquelle einen Kompressor auf, an den neben weiteren Elementen der Druckmittelanlage über Druckmittelleitungen vier Absperrventile mit ihrer Eingangsseite angeschlossen sind. Die Absperrventile sind ausgangsseitig mit jeweils einem Druckmittelkreis, der z. B. einen Druckmittelbehälter aufweisen kann, verbunden. Die Absperrventile können durch eine zentrale Steuereinrichtung mittels elektrischer Signale betätigt werden. Durch entsprechende Ansteuerung der Absperrventile ist es möglich, eine Trennung zwischen den Druckmittelkreisen zu erreichen. Eine solche Trennung ist einerseits aus Sicherheitsgründen erforderlich, damit ein einzelner defekter Druckmittelkreis nicht den Ausfall der gesamten Druckmittelanlage hervorruft. Andererseits ist eine solche Trennung auch erforderlich, um in den verschiedenen Druckmittelkreisen unterschiedliche Druckniveaus einstellen zu können. Unterschiedliche Druckniveaus sind beispielsweise zur Ansteuerung verschiedener Druckmittelverbraucher, wie z. B. Stellzylinder mit unterschiedlichen Rückstellkräften, erforderlich.

Die bekannte Druckmittelanlage hat den Nachteil, daß bei Ausfall der elektrischen Energie die mit den Druckmittelkreisen verbundenen Absperrventile permanent geöffnet sind und dadurch die erforderliche Trennung zwischen den Druckmittelkreisen nicht mehr gewährleistet ist.

Eine Trennung zwischen den Druckmittelkreisen auch bei Ausfall der elektrischen Energie könnte zwar durch Verwendung von andersartigen Absperrventilen, die z. B. bei Ausfall der elektrischen Energie permanent geschlossen sind, erreicht werden, jedoch steht den Druckmittelverbrauchern dann nur noch der in dem dem jeweiligen Druckmittelkreis zugeordneten Druckmittelbehälter vorhandene Druckmittelvorrat zur Verfügung. Nach Verbrauch dieses Druckmittelvorrates ist der jeweilige Druckmittelkreis nicht mehr funktionsfähig. In einem solchen Fall kann es beispielsweise vorkommen, daß ein sicherheitsrelevanter Druckmittelkreis, wie z. B. der Betriebsbremskreis einer druckmittelgesteuerten Bremsanlage, mangels Druckmittelvorrat nicht mehr funktionsfähig ist, während ein nicht sicherheitsrelevanter Druckmittelkreis, wie z. B. ein Nebenverbraucherkreis, noch über einen Druckmittelvorrat verfügt. Dies führt insbesondere beim Einsatz der beschriebenen Druckmittelanlage in einer druckmittelgesteuerten Bremsanlage zu einem erhöhten Sicherheitsrisiko.

Aus der DE 41 09 741 C1 ist ein in Kraftfahrzeugen zu verwendendes Mehrkreisschutzventil bekannt, bei welchem die an das Mehrkreisschutzventil argeschlossenen Druckmittelkreise durch jeweils ein druckmittelgesteuertes Überströmventil mit Druckluft versorgt werden. Die Überströmventile sind nicht für eine Betätigung durch elektrische Energie ausgelegt und werden demzufolge auch nicht von einem Ausfall elektrischer Energie in ihrer Funktion beeinflußt. Das dortige Mehrkreisschutzventil weist außerdem ein Steuerventil auf, welches dazu dient, vorrangige Druckmittelkreise bevorzugt mit Druckluft zu befüllen.

Aus der EP-A-0 277 602 ist eine Druckmittelanlage bekannt, die einen ersten Druckmittelkreis und einen zweiten Druckmittelkreis aufweist. Jeder dieser beiden Druckmittelkreise enthält eine Druckmittelquelle, einen Verbraucher und eine als Mehrwegeventil ausgebildete, elektrisch ansteuerbare Drucksteuereinrichtung, die zwischen der Druckmittelquelle und dem Verbraucher angeordnet ist. Die von der Druckmittelquelle des einen Druckmittelkreises zur Drucksteuereinrichtung dieses Druckmittelkreises hinführende Druckmittelleitung und die von der Druckmittelquelle des anderen Druckmittelkreises zur Drucksteuereinrichtung dieses Druckmittelkreises hinführende Druckmittelleitung sind über ein Absperrventil miteinander verbunden. Durch diese Maßnahme ist es möglich, bei Bedarf den Verbraucher des jeweils einen Druckmittelkreises mit dem Druck aus dem jeweils anderen Druckmittelkreis zu beaufschlagen.

Bei Störungen an einer der beiden Drucksteuereinrichtungen ist eine Versorgung des mit dieser Drucksteuereinrichtung verbundenen Verbrauchers mit Druckmittel jedoch nicht immer möglich.

Der Erfindung liegt deshalb die Aufgabe zugrunde, eine durch eine elektrische Steuerenergie steuerbare Druckmittelanlage anzugeben, bei der bei Ausfall der elektrischen Steuerenergie die Druckmittelversorgung eines sicherheitsrelevanten Druckmittelkreises wenigstens für eine bestimmte Zeitdauer aus einem anderen, nicht sicherheitsrelevanten Druckmittelkreis erfolgen kann und eine Trennung eines sicherheitsrelevanten Druckmittelkreises von anderen Druckmittelkreisen erhalten bleibt.

Diese Aufgabe wird durch die im Patentanspruch 1 angegebene Erfindung gelöst. Weiterbildungen und vorteilhafte Ausgestaltungen der Erfindung sind in den Unteransprüchen angegeben.

Die Erfindung bezieht sich auf Druckmittelanlagen, bei denen die Steuerenergie zur Steuerung der Druckmittelanlage einerseits und das Druckmittel für die Druckmittelkreise andererseits aus unterschiedlichen Quellen stammen, und zwar weil als Steuerenergie elektrische Energie verwendet wird und als Druckmittel vorzugsweise Druckluft in Betracht kommt. Im folgenden sind daher Begriffe wie Steuerenergie, Steuerenergieeingang, Steuerenergiequelle oder Steuersignale immer als elektrische Steuerenergie, elektrischer Steuerenergieeingang, elektrische Steuerenergiequelle oder elektrische Steuersignale zu verstehen.

Als Steuerenergieeingang ist in den folgenden Ausführungen ein Eingang zu verstehen, dem die Steuerenergie direkt aus einer Steuerenergiequelle oder indirekt als Steuersignal, das beispielsweise von einer Steuereinrichtung durch Ein- und Ausschalten der Steuerenergie erzeugt wird, zugeführt wird.

Ein Vorteil der Erfindung besteht darin, daß wenigstens zwei Druckmittelkreise druckmittelausgangsseitig der diesen Druckmittelkreisen zugeordneten Drucksteuereinrichtungen über eine Absperreinrichtung, die ein druckmittelbetätigbares Absperrelement aufweist, verbunden sind. Dadurch, daß das Absperrelement druckmittelbetätigbar ist und somit auch bei Ausfall der Steuerenergie funktionsfähig bleibt, ist es durch Öffnen des Absperrelementes mögich, den verbleibenden Druckmittelvorrat eines nicht sicherheitsrelevanten Druckmittelkreises für eine Notversorgung einem besonders sicherheitsrelevanten Druckmittelkreis, dessen verbliebener Druckmittelvorrat bereits verbraucht ist, zur Verfügung zu stellen. Bei geschlossenem Absperrelement hingegen ist ein Druckmittelfluß zwischen den Druckmittelkreisen gesperrt.

In einer vorteilhaften Weiterbildung der Erfindung ist genau eine der Drucksteuereinrichtungen so ausgebildet, daß sie bei Ausfall der Steuerenergie ihren Druckmittelausgang öffnet und hierdurch das Druckmittel in den dieser Drucksteuereinrichtung zugeordneten Druckmittelkreis einströmen kann. Die übrigen Drucksteuereinrichtungen sind dann so ausgebildet, daß sie bei Ausfall der Steuerenergie ihre Druckmittelausgänge schließen. In Verbindung mit der Absperreinrichtung, die an den Druckmittelkreis angeschlossen ist, der mit der Drucksteuereinrichtung verbunden ist, die bei Ausfall der Steuerenergie ihren Druckmittelausgang öffnet, kann bei Ausfall der Steuerenergie auch eine permanente Druckmittelversorgung des anderen an die Absperreinrichtung angeschlossenen Druckmittelkreises erreicht werden.

Als störungsfreier Normalbetrieb ist in den folgenden Ausführungen derjenige Betriebszustand zu verstehen, der sich bei Vorhandensein der Steuerenergie einstellt. Der sich in einem Druckmittelkreis in diesem Betriebszustand einstellende Druck wird als Solldruck bezeichnet.

In einer weiteren vorteilhaften Weiterbildung der Erfindung weist der Druckmittelkreis derjenigen Drucksteuereinrichtung, die bei Ausfall der Steuerenergie ihren Druckmittelausgang öffnet, von allen Druckmittelkreisen den geringsten Solldruck auf. Hierdurch ist es möglich, den anderen an der Absperreinrichtung angeschlossenen Druckmittelkreis bei Ausfall der Steuerenergie mit einem Druck zu versorgen, der nicht höher ist als der in dem diesem Druckmittelkreis im störungsfreien Normalbetrieb vorhandene Solldruck. Dies hat den Vorteil, daß druckmittelbetriebene Elemente wie z. B. Stellzylinder nicht durch einen überhöhten Druck beschädigt werden können.

In einer weiteren vorteilhaften Weiterbildung ist die Absperreinrichtung so ausgebildet, daß das Absperrelement von dem den höheren Druck aufweisenden Druckmittelkreis z. B. nach Art eines Druckbegrenzungsventils in Absperrichtung betätigt werden kann. Dies ermöglicht auf einfache Weise eine Trennung der Druckmittelkreise im störungsfreien Normalbetrieb. In diesem Betriebszustand bewirkt der höhere Druck der beiden Druckmittelkreise, die über die Absperreinrichtung verbunden sind, daß das Absperrelement geschlossen ist und somit die beiden Druckmittelkreise voneinander getrennt sind. Bei Ausfall der Steuerenergie wird der Druckmittelkreis mit dem höheren Druck über die Drucksteuereinrichtung nicht weiter mit dem Druckmittel versorgt, weil die diesem Druckmittelkreis zugeordnete Drucksteuereinrichtung dann ihren Druckmittelausgang schließt. Die an diesen Druckmittelkreis angeschlossenen Verbraucher werden dann zunächst über den noch vorhandenen Druckmittelvorrat versorgt, bis der Druck in diesem Druckmittelkreis einen bestimmten Wert unterschreitet. Da der andere an die Absperreinrichtung angeschlossene Druckmittelkreis auch bei Ausfall der Steuerenergie über die ihm zugeordnete Drucksteuereinrichtung weiterhin mit dem Druckmittel versorgt wird, bleibt der Druck in dem anderen Druckmittelkreis weiterhin erhalten. Sobald der Druck in dem einen Druckmittelkreis einen bestimmten Wert unterschreitet, öffnet die Absperreinrichtung und läßt einen Druckmittelzufluß von dem anderen Druckmittelkreis zu.

Gemäß einer weiteren vorteilhaften Weiterbildung weist die erfindungsgemäße Druckmittelanlage wenigstens zwei Absperreinrichtungen auf. In diesem Fall sind außerdem wenigstens drei Drucksteuereinrichtungen sowie wenigstens drei ihnen zugeordnete Druckmittelkreise vorhanden. Dadurch, daß alle Absperreinrichtungen an einen Druckmittelkreis angeschlossen sind, der von allen Druckmittelkreisen den geringsten Solldruck aufweist, ist es möglich, bei Ausfall der Steuerenergie mehrere sicherheitsrelevante Druckmittelkreise in der zuvor beschriebenen Weise mit dem Druckmittel dauerhaft zu versorgen und die Trennung der sicherheitsrelevanten Druckmittelkreise zu gewährleisten. Auch im störungsfreien Normalbetrieb ist selbstverständlich eine Trennung der Druckmittelkreise gewährleistet.

Gemäß einer Weiterbildung der Erfindung wird die Absperreinrichtung durch eine Druckdifferenz zwischen den Druckmittelkreisen, mit denen die Absperreinrichtung verbunden ist, nach Art eines Rückschlagventils gesteuert. Durch diese Art der Weiterbildung wird die Funktion der Absperreinrichtung nicht mehr durch einen einzigen Druck, sondern durch die Differenz zweier Drücke gesteuert. Hierdurch ist es möglich, die Absperrung des Druckmittels zwischen den Druckmittelkreisen nicht nur von dem den höheren Druck aufweisenden Druckmittelkreis, sondern mit gleichzeitig auch von dem den niedrigen Druck aufweisenden Druckmittelkreis abhängig zu machen. Bei Einsatz mehrerer Absperreinrichtungen ist es insbesondere möglich, durch die Wahl unterschiedlicher Druckdifferenzen zur Betätigung des Absperrelements der Absperreinrichtung eine Abstufung der Versorgung von sicherheitsrelevanten Druckmittelkreisen bei Ausfall der Steuerenergie derart vorzusehen, daß z. B. eine unterschiedliche zeitliche Staffelung bei der Versorgung der Druckmittelkreise in Abhängigkeit ihrer Bedeutung für die Betriebssicherheit der Druckmittelanlage möglich ist.

In einer besonders vorteilhaften Ausführungsform kann als Absperreinrichtung ein Rückschlagventil verwendet werden. Dies hat den Vorteil, daß die Absperreinrichtung besonders einfach und zuverlässig aufgebaut ist. Als Absperrelement kann in diesem Fall z. B. eine Kugel dienen. Es ist vorteilhaft, das Rückschlagventil mit seiner Ausgangsseite mit dem Druckmittelkreis zu verbinden, der den höheren Solldruck aufweist. Hierdurch sind im störungsfreien Normalbetrieb die Druckmittelkreise voneinander getrennt, und bei Ausfall der Steuerenergie öffnet das Rückschlagventil nach Verbrauch des Druckmittelvorrats in dem Druckmittelkreis mit dem höheren Solldruck und läßt das Druckmittel durchströmen.

In einer weiteren vorteilhaften Weiterbildung ist das Absperrelement zur Druckmittelabsperrung mit einer vorgegebenen Kraft in Absperrichtung belastet. Hierfür kann z. B. eine Feder eingesetzt werden. Durch geeignete Wahl des Betrages der Federkraft kann die Schaltschwelle für die Betätigung des Absperrelementes der Absperreinrichtung eingestellt werden. In Verbindung mit diesem Merkmal ist es auch möglich, bei Aufrechterhaltung der Trennung zwischen den Druckmittelkreisen eine Absperreinrichtung zwischen zwei Druckmittelkreisen einzusetzen, die wenigstens im störungsfreien Normalbetrieb denselben Druck aufweisen.

Gemäß einer vorteilhaften Weiterbildung werden die Drucksteuereinrichtungen und/oder die Absperreinrichtungen durch eine zentrale Steuereinrichtung, die z. B. als elektronisches Steuergerät ausgebildet sein kann, gesteuert. Die zentrale Steuereinrichtung ist über die die Steuerenergie führenden Leitungen an die Steuerenergieeingänge der Drucksteuereinrichtungen und/oder der Absperreinrichtungen angeschlossen. Die zentrale Steuereinrichtung erzeugt bei Vorhandensein der Steuerenergie dann Steuersignale in den die Steuerenergie führenden Leitungen. Hierdurch können der Aufwand und die Kosten gegenüber einzelnen, jeweils in den Drucksteuereinrichtungen bzw. den Absperreinrichtungen angeordneten Steuereinrichtungen erheblich verringert werden. Eine zentrale Steuereinrichtung, die eine übergeordnete Steuerfunktion ausübt, hat außerdem den Vorteil, daß eine Erkennung von Fehlern in einzelnen Druckmittelkreisen sowie die Durchführung von Sicherheitsmaßnahmen vereinfacht wird.

In einer vorteilhaften Weiterbildung der Erfindung weisen die Drucksteuereinrichtungen jeweils einen Druckmitteleingang auf. Die Druckmitteleingänge aller Drucksteuereinrichtungen sind dann mit einer einzigen Druckmittelversorgungseinrichtung, z. B. einem Kompressor, entweder unmittelbar über Druckmittelleitungen oder mittelbar über weitere Elemente der Druckmittelanlage verbunden. Die Verwendung einer einzigen Druckmittelversorgungseinrichtung hat den Vorteil eines verringerten Aufwandes der Druckmittelanlage sowie geringerer Kosten im Vergleich zu der Versorgung jedes Druckmittelkreises durch eine eigene Druckmittelversorgungseinrichtung. Bei Versorgung aller Druckmittelkreise aus einer einzigen Druckmittelversorgungseinrichtung ist zur Trennung der Druckmittelkreise eine geeignete Abstimmung bei der Steuerung der Drucksteuereinrichtungen erforderlich. In einer bevorzugten Betriebsart sind die Steuersignale so abgestimmt, daß immer nur eine Drucksteuereinrichtung ihren Druckmittelausgang geöffnet hat und alle anderen Drucksteuereinrichtungen ihre Druckmittelausgänge geschlossen haben.

In einer weiteren besonders vorteilhaften Weiterbildung weisen die Drucksteuereinrichtungen jeweils einen Drucksensor auf, der mit dem jeweiligen Druckmittelausgang verbunden ist. Hierdurch ist es möglich, für jeden Druckmittelkreis getrennt den Druck-Istwert einem gewünschten Druck-Sollwert anzugleichen. Durch die Wahl unterschiedlicher Druck-Sollwerte in den Druckmittelkreisen können dann unterschiedliche Arten von druckmittelbetätigbaren Einrichtungen betrieben werden.

Gemäß einer weiteren vorteilhaften Weiterbildung weist jede Absperreinrichtung zusätzlich jeweils einen Steuerenergieeingang auf. Die Steuerenergieeingänge sind mit jeweils einer die Steuerenergie führenden Leitung verbunden, über die das jeweilige Absperrelement zur Druckmittelabsperrung in Absperrichtung betätigt werden kann. Dies hat den Vorteil, daß bei Vorhandensein der Steuerenergie durch Zuführung geeigneter Steuersignale alle Absperreinrichtungen unabhängig von den Drücken in den an ihnen angeschlossenen Druckmittelkreisen geschlossen gehalten werden können. Da auch die Drucksteuereinrichtungen durch Zuführung geeigneter Steuersignale geschlossen werden können, ist es dann möglich, einen Druckmittelkreis, der einen Defekt wie z. B. eine Leckage aufweist, von der Druckmittelversorgung zu trennen, ohne daß andere Druckmittelkreise in ihrer Funktion beeinträchtigt werden. Bei Ausfall der Steuerenergie sind die Absperreinrichtungen dann vom Druckmittel betätigbar. Sie können dann in der zuvor beschriebenen Weise jeweils zwei Druckmittelkreise miteinander verbinden.

Die Erfindung wird anhand eines Ausführungsbeispiels unter Zuhilfenahme einer Zeichnung näher erläutert.

Es zeigt:

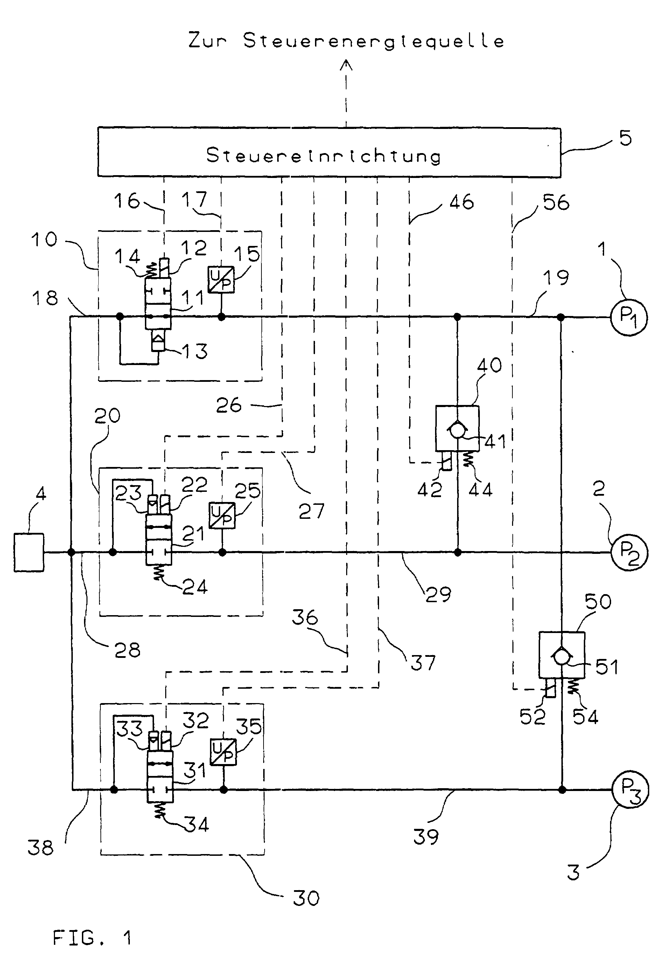

- Fig. 1: eine schematische Darstellung der erfindungsgemäßen Druckmittelanlage.

In der Fig. 1 werden Druckmittelleitungen mit durchgehenden Linien und die Steuerenergie führende Leitungen mit gestrichelten Linien dargestellt.

Die Druckmittelanlage weist drei Druckmittelkreise (1, 2, 3) mit den Solldruckniveaus P1, P2 und P3 auf. Die Druckmittelkreise (1, 2, 3) werden von jeweils einer ihnen zugeordneten Drucksteuereinrichtung (10, 20, 30) über Druckmittelleitungen (19, 29, 39), die jeweils am Druckmittelausgang der ihnen zugeordneten Drucksteuereinrichtung (10, 20, 30) angeschlossen sind, mit dem Druckmittel versorgt. Die Druckmitteleingänge der Drucksteuereinrichtungen (10, 20, 30) sind über weitere Druckmittelleitungen (18, 28, 38) mit einer Druckmittelversorgungseinrichtung (4) verbunden.

Als Druckmittel kann z. B. Drucköl oder Druckluft eingesetzt werden. Bei Verwendung von Druckluft ist die Druckmittelversorgungseinrichtung (4) in einer vorteilhaften Ausführungsform als Kompressor ausgebildet. Die Druckmittelkreise (1, 2, 3) können z. B. Vorratsbehälter für Druckluft, Stellzylinder und/oder Federspeicherzylinder aufweisen.

Die Druckmittelkreise (2, 3) sind über Absperreinrichtungen (40, 50) mit dem Druckmittelkreis (1) verbunden, dessen Solldruckniveau P1 geringer ist als die Solldruckniveaus P2 und P3 der Druckmittelkreise (2, 3).

Die Drucksteuereinrichtungen (10, 20, 30) und die Absperreinrichtungen (40, 50) weisen durch eine Steuerenergie betätigbare Steuereingänge (12, 22, 32, 42, 52) auf, die mittels Leitungen (16, 26, 36, 46, 56), die die Steuerenergie führen, mit einer zentralen Steuereinrichtung (5) verbunden sind. Die Steuereinrichtung (5) kann zur Versorgung mit der Steuerenergie an eine Steuerenergiequelle angeschlossen werden. Als Steuerenergie kann z. B. elektrische Energie verwendet werden. Die die Steuerenergie führenden Leitungen (16, 26, 36, 46, 56) sind dann als elektrische Leitungen ausgebildet und dienen zur Übertragung elektrischer Steuersignale. Die elektrisch betätigbaren Steuereingänge (12, 22, 32, 42, 52) sind in einer vorteilhaften Ausführungsform als Elektromagnete ausgebildet.

Die Drucksteuereinrichtungen (10, 20, 30) weisen außerdem Drucksensoren (15, 25, 35) auf, die über weitere elektrische Leitungen (17, 27, 37) mit der Steuereinrichtung (5) verbunden sind. Die Drucksensoren (15, 25, 35) geben in Abhängigkeit von dem an ihrem Druckmittelanschluß sensierten Druck elektrische Signale über die Leitungen (17, 27, 37) an die Steuereinrichtung (5) ab.

Die Drucksteuereinrichtung (10) ist so ausgebildet, daß sie bei Ausfall der Steuerenergie ihren Druckmittelausgang öffnet. Hierfür enthält die Drucksteuereinrichtung (10) ein Ventil (11), das als 2/2-Wegeventil ausgebildet ist. Das Ventil (11) kann daher in zwei Schaltstellungen geschaltet werden. In der ersten Schaltstellung, die in der Fig. 1 dargestellt ist, sind die Druckmittelleitungen (18) und (19) miteinander verbunden. Die Druckmittelversorgungseinrichtung (4) kann dann den Druckmittelkreis (1) mit dem Druckmittel versorgen. In der zweiten Schaltstellung sind die Druckmittelleitungen (18) und (19) voneinander getrennt, so daß ein Druckmittelfluß zwischen diesen Druckmittelleitungen nicht möglich ist.

Die Schaltstellungen des Ventils (11) werden von den Steuereingängen (12, 13) sowie der Feder (14) gesteuert. Hierbei wirkt der elektrisch betätigbare Steuereingang (12) dem durch das Druckmittel betätigbaren Steuereingang (13) entgegen. Die Feder (14) wirkt ebenfalls dem Steuereingang (13) entgegen und unterstützt dadurch den Steuereingang (12). Die durch die Steuereingänge (12, 13) und die Feder (14) erzeugbaren Steuerkräfte sind so abgestimmt, daß die durch Anlegen eines Steuersignals am Steuereingang (12) entstehende Steuerkraft zusammen mit der Kraft der Feder (14) die Steuerkraft des Steuereingangs (13) überwindet und das Ventil (11) in die zweite Schaltstellung schaltet. Wenn am Steuereingang (12) kein Steuersignal anliegt, z. B. aufgrund einer Steuerfunktion der Steuereinrichtung (5) oder durch Ausfall der Steuerenergie, dann überwindet die vom Steuereingang (13) erzeugte Kraft die verbleibende Gegenkraft der Feder (14) und schaltet das Ventil (11) somit in die erste Schaltstellung.

Die Drucksteuereinrichtung (20) entspricht der Drucksteuereinrichtung (30). Es wird daher im folgenden nur die Drucksteuereinrichtung (20) beschrieben. Die Beschreibung gilt jedoch auch für die Drucksteuereinrichtung (30). Die Drucksteuereinrichtung (20) enthält ein Ventil (21), das ebenso wie das Ventil (11) als 2/2-Wegeventil ausgebildet ist. Es weist daher auch zwei Schaltstellungen auf. In der in Fig. 1 dargestellten ersten Schaltstellung sind die Druckmittelleitungen (28) und (29) nicht miteinander verbunden. In der zweiten Schaltstellung sind die Druckmittelleitungen (28) und (29) miteinander verbunden, so daß ein Druckmittelfluß zwischen diesen Druckmittelleitungen erfolgen kann.

Das Ventil (21) weist ebenso wie das Ventil (11) einen elektrisch betätigbaren Steuereingang (22), einen druckmittelbetätigbaren Steuereingang (23) sowie eine Feder (24) auf. Im Gegensatz zum Ventil (11) wirkt beim Ventil (21) jedoch der elektrisch betätigbare Steuereingang (22) der Feder (24) entgegen. Der druckmittelbetätigbare Steuereingang (23) wirkt ebenso wie beim Ventil (11) der Feder (24) entgegen, so daß beim Ventil (21) der Steuereingang (23) den Steuereingang (22) unterstützt. Bei Anlegen eines Steuersignals am Steuereingang (22) überwindet die dabei entstehende Steuerkraft zusammen mit der vom Steuereingang (23) erzeugten Steuerkraft die Kraft der Feder (24), so daß das Ventil (21) in die zweite Schaltstellung geschaltet wird. Wenn am Steuereingang (22) jedoch kein Steuersignal anliegt, z. B. aufgrund der Steuerfunktion der Steuereinrichtung (5) oder durch Ausfall der Steuerenergie, dann überwindet die Kraft der Feder (24) die durch den Steuereingang (23) erzeugte Kraft und schaltet das Ventil (21) in die erste Schaltstellung.

Die Drucksteuereinrichtungen (20, 30) sind daher so ausgebildet, daß sie bei Ausfall der Steuerenergie ihre Druckmittelausgänge schließen. Die Drucksteuereinrichtung (10) ist so ausgebildet, daß sie bei Ausfall der Steuerenergie ihren Druckmittelausgang öffnet.

Die Absperreinrichtungen (40, 50) sind identisch ausgebildet. Im folgenden wird daher nur die Absperreinrichtung (40) beschrieben. Die Beschreibung gilt jedoch auch für die Absperreinrichtung (50).

Die Absperreinrichtung (40) kann zur Druckmittelabsperrung z. B. ein Rückschlagventil enthalten. Das Absperrelement (41) ist dann beispielsweise als Kugel ausgebildet. Das Absperrelement (41) wird durch den das höhere Druckniveau P2 aufweisenden Druckmittelkreis (2) in Absperrichtung betätigt. Das Absperrelement (41) wird durch die Kraft der Feder (44) und durch die Steuerkraft des elektrisch betätigbaren Steuereinganges (42) zusätzlich in Absperrichtung betätigt. Die durch Anlegen eines Steuersignals an den Steuereingang (42) erzeugte Steuerkraft ist so bemessen, daß sie zusammen mit der Kraft der Feder (44) entgegen der durch den Druck P1 des Druckmittelkreises (1) erzeugten Kraft das Absperrelement (41) im abgesperrten Zustand hält, auch wenn im Druckmittelkreis (2) kein Druck vorhanden ist. Außerdem ist die Kraft der Feder (44) so bemessen, daß bei Fehlen eines Steuersignals am Steuereingang (42), z. B. bei Ausfall der Steuerenergie, das Absperrelement (41) geöffnet wird, wenn der Druck P2 im Druckmittelkreis (2) den Druck P1 im Druckmittelkreis (1) um einen bestimmten Betrag unterschreitet. Bei geöffnetem Absperrelement (41) kann dann das Druckmittel über die Absperreinrichtung (40) vom Druckmittelkreis (1) in den Druckmittelkreis (2) fließen.

Der Durchlaßquerschnitt der Absperreinrichtung (40) ist so bemessen, daß einerseits ein für den Betrieb eines sicherheitsrelevanten Druckmittelkreises (2,3) ausreichender Druckmittelzufluß erreicht wird, andererseits aber bei einer Leckage in einem der Druckmittelkreise (2, 3) ein für den Betrieb des jeweils anderen Druckmittelkreises (2, 3) ausreichendes Druckniveau sichergestellt wird. Der Durchlaßquerschnitt kann z. B. durch Einsatz einer geeigneten Blende innerhalb Absperreinrichtung (40) angepaßt werden.

Im folgenden wird die bevorzugte Betriebsart der erfindungsgemäßen Druckmittelanlage im störungsfreien Normalbetrieb sowie weitere bevorzugte Betriebsarten bei bestimmten Funktionsstörungen in der Druckmittelanlage beschrieben.

Bei Vorhandensein der Steuerenergie erzeugt die Steuereinrichtung (5) Steuersignale in den Leitungen (16, 26, 36, 46, 56). Die Steuersignale weisen zwei verschiedene Zustände auf, die im folgenden mit EIN und AUS bezeichnet werden sollen. Das Signal EIN kann z. B. durch Einschalten einer elektrischen Spannung erzeugt werden. Das Signal AUS wird durch Ausschalten der elektrischen Spannung erzeugt. Beim Anlegen des Signals EIN ist der jeweilige elektrische Steuereingang (12, 22, 32, 42, 52) betätigt, beim Signal AUS ist er nicht betätigt.

Im störungsfreien Normalbetrieb erzeugt die Steuereinrichtung (5) in den Leitungen (46, 56) ständig das Signal EIN. Hierdurch werden die Absperreinrichtungen (40, 50) ständig im abgesperrten Zustand gehalten. Ein Druckmittelfluß zwischen den Druckmittelkreisen (1, 2, 3) ist nicht möglich.

In den Leitungen (16, 26, 36) erzeugt die Steuereinrichtung (5) wechselnde Steuersignale zur Angleichung des Druck-Istwertes des jeweiligen Druckmittelkreises an Druck-Sollwerte, die z. B. in der Steuereinrichtung (5) gespeichert sein können. Hierfür wertet die Steuereinrichtung (5) die von den Drucksensoren (15, 25, 35) erzeugten und über die Leitungen (17, 27, 37) an sie übermittelten Signale aus. Bei der Erzeugung der Steuersignale in den Leitungen (16, 26, 36) sorgt die Steuereinrichtung (5) in einer bevorzugten Betriebsart der Druckmittelanlage dafür, daß zu jedem Zeitpunkt immer nur eines der Ventile (11, 21, 31) einen Druckmittelfluß vom jeweiligen Druckmitteleingang der Drucksteuereinrichtung zum jeweiligen Druckmittelausgang zuläßt, so daß die Druckmittelkreise (1, 2, 3) zu jeder Zeit voneinander getrennt sind. Der durch ein geöffnetes Ventil mit dem Kompressor (4) verbundene Druckmittelkreis wird dann mit weiterem Druckmittel versorgt, bis der entsprechende Druck-Sollwert dieses Druckmittelkreises erreicht ist.

Wenn einer der Druckmittelkreise (1, 2, 3), z. B. der Druckmittelkreis (2), einen Defekt, z. B. eine größere Leckage, aufweist, dann ist der Kompressor (4) nicht mehr in der Lage, den Druck-Sollwert P2 des Druckmittelkreises (2) aufrechtzuerhalten. Aus Sicherheitsgründen ist es jedoch wünschenswert, daß die unbeschädigten Druckmittelkreise (1, 3) nicht durch den Defekt des Druckmittelkreises (2) beeinträchtigt werden und weiterhin betrieben werden können. Daher ist die Steuereinrichtung (5) so ausgebildet, daß sie mittels der Signale des Drucksensors (25) sowie gegebenenfalls durch Anlegen geeigneter Steuersignale am Steuereingang (22) den Defekt des Druckmittelkreises (2) erkennt und dann durch ständige Erzeugung des Steuersignals AUS am Steuereingang (22) den defekten Druckmittelkreis (2) dauerhaft vom Kompressor (4) und den anderen Druckmittelkreisen (1, 3) abtrennt.

In einem anderen Fall ist es auch möglich, daß statt eines Druckmittelkreises (1, 2, 3) z. B. der Kompressor (4) einen Defekt aufweist, so daß die Druckmittelversorgung der gesamten Druckmittelanlage nicht mehr gewährleistet ist. Die Steuereinrichtung (5) ist daher außerdem so ausgebildet, daß sie durch eine Auswertung der Signale der Drucksensoren (15, 25, 35) einen derartigen Defekt erkennen kann. Nach Erkennung des Defektes erzeugt die Steuereinrichtung (5) in der Leitung (16) ständig das Signal EIN und in den Leitungen (26, 36) ständig das Signal AUS. Hierdurch sind die Druckmittelkreise (1, 2, 3) jeweils voneinander und vom Kompressor (4) getrennt. Je nach Druckniveau in den Druckmittelkreisen (1, 2, 3) erzeugt die Steuereinrichtung (5) in den Leitungen (46, 56) Steuersignale, durch die eine oder beide Absperreinrichtungen (40, 50) geöffnet werden können, so daß die sicherheitsrelevanten Druckmittelkreise (2, 3) wenigstens für eine bestimmte Zeit aus dem verbleibenden Druckmittelvorrat des nicht sicherheitsrelevanten Druckmittelkreises (1) versorgt werden können.

In einem weiteren Fall, in dem die Druckmittelanlage druckmittelseitig keine Fehlfunktion aufweist, soll die Funktion der Druckmittelanlage bei Ausfall der Steuerenergie betrachtet werden. In diesem Fall führt die Steuereinrichtung (5) keine Steuerfunktion aus. Die Leitungen (16, 26, 36, 46, 56) weisen dann das Steuersignal AUS auf. Der Kompressor (4) versorgt dann über das geöffnete Ventil (11) der Drucksteuereinrichtung (10) den Druckmittelkreis (1) ständig mit dem Druckmittel. Die Druckmittelkreise (2, 3) werden über die Drucksteuereinrichtungen (20, 30) nicht mit dem Druckmittel versorgt. Wenn jedoch einer der Druckmittelkreise (2, 3) nach Verbrauch des noch vorhandenen Druckmittels ein Druckniveau erreicht, das um einen bestimmten Betrag geringer ist als das Druckniveau des Druckmittelkreises (1), dann öffnet die dem jeweiligen Druckmittelkreis (2, 3) zugeordnete Absperreinrichtung (40, 50) und läßt das Druckmittel vom Druckmittelkreis (1) in den jeweiligen Druckmittelkreis (2, 3) fließen. Hierdurch werden die Druckmittelkreise (2, 3) auch bei Ausfall der Steuerenergie ständig mit dem Druckmittel versorgt.

## Patentansprüche

1. Druckmittelanlage zur Versorgung von wenigstens zwei Druckmittelkreisen mit einem Druckmittel mit folgenden Merkmalen:
a) für jeden Druckmittelkreis ist eine Drucksteuereinrichtung (10, 20, 30) vorhanden,
b) die Drucksteuereinrichtungen (10, 20, 30) weisen jeweils wenigstens einen elektrischen Steuerenergieeingang (12, 22, 32) und einen Druckmittelausgang auf,
c) die elektrischen Steuerenergieeingänge (12, 22, 32) sind jeweils mit einer eine elektrische Steuerenergie führenden Leitung (16, 26, 36) verbunden,
d) die die elektrische Steuerenergie führenden Leitungen (16, 26, 36) sind mit einer einzigen elektrischen Steuerenergiequelle verbindbar,
e) die Druckmittelausgänge sind mit jeweils einem der Druckmittelkreise (1, 2, 3) verbunden,
f) es ist wenigstens eine Absperreinrichtung (40, 50) vorhanden,
gekennzeichnet durch folgende Merkmale:
g) die Absperreinrichtung (40, 50) verbindet jeweils zwei Druckmittelkreise (1, 2, 3) druckmittelausgangsseitig der diesen Druckmittelkreisen (1, 2, 3) zugeordneten Drucksteuereinrichtungen (10, 20, 30),
h) die Absperreinrichtung (40, 50) weist ein druckmittelbetätigbares Absperrelement (41, 51) zur Druckmittelabsperrung auf.

2. Druckmittelanlage nach Patentanspruch 1, gekennzeichnet durch folgende Merkmale:
a) eine der Drucksteuereinrichtungen (10) ist so ausgebildet, daß sie bei Ausfall der elektrischen Steuerenergie ihren Druckmittelausgang öffnet,
b) alle übrigen Drucksteuereinrichtungen (20, 30) sind so ausgebildet, daß sie bei Ausfall der elektrischen Steuerenergie ihre Druckmittelausgänge schließen,
c) die Absperreinrichtung (40, 50) verbindet den Druckmittelkreis (1), der an die Drucksteuereinrichtung (10) angeschlossen ist, die bei Ausfall der elektrischen Steuerenergie ihren Druckmittelausgang öffnet, mit einem der übrigen Druckmittelkreise (2, 3).

3. Druckmittelanlage nach Patentanspruch 2, **dadurch gekennzeichnet**, daß der Druckmittelkreis (1) derjenigen Drucksteuereinrichtung (10), die bei Ausfall der elektrischen Steuerenergie ihren Druckmittelausgang öffnet, von allen Druckmittelkreisen (1, 2, 3) den geringsten Solldruck aufweist.

4. Druckmittelanlage nach Patentanspruch 2 oder 3, **dadurch gekennzeichnet**, daß das Absperrelement (41, 51) von dem den höheren Druck aufweisenden Druckmittelkreis (2, 3) in Absperrichtung betätigt wird.

5. Druckmittelanlage nach wenigstens einem der vorhergehenden Patentansprüche, gekennzeichnet durch folgende Merkmale:
a) es sind wenigstens zwei Absperreinrichtungen (40, 50) vorhanden,
b) jede der Absperreinrichtungen (40, 50) verbindet jeweils den Druckmittelkreis (1), der von allen Druckrnittelkreisen (1, 2, 3) den geringsten Solldruck aufweist, mit einem der übrigen Druckmittelkreise (2, 3).

6. Druckmittelanlage nach wenigstens einem der vorhergehenden Patentansprüche, **dadurch gekennzeichnet**, daß die Absperreinrichtung bzw. die Absperreinrichtungen (40, 50) nach Art eines Rückschlagventils durch eine Druckdifferenz gesteuert wird bzw. gesteuert werden.

7. Druckmittelanlage nach wenigstens einem der vorhergehenden Patentansprüche, **dadurch gekennzeichnet**, daß als Absperreinrichtung (40, 50) ein Rückschlagventil dient, das mit seiner Ausgangsseite mit dem Druckmittelkreis (2, 3) verbunden ist, der den höheren Solldruck aufweist.

8. Druckmittelanlage nach wenigstens einem der vorhergehenden Patentansprüche, **dadurch gekennzeichnet**, daß das Absperrelement (41, 51) zur Druckmittelabsperrung mit vorgegebener Kraft in Absperrichtung belastet ist.

9. Druckmittelanlage nach wenigstens einem der vorhergehenden Patentansprüche, **dadurch gekennzeichnet**, daß die Drucksteuereinrichtungen (10, 20, 30) und/oder die Absperreinrichtung bzw. die Absperreinrichtungen (40, 50) durch eine zentrale Steuereinrichtung (5), die mit der elektrischen Steuerenergiequelle verbindbar ist, über die die elektrische Steuerenergie führenden Leitungen (16, 26, 36, 46, 56) mittels elektrischen Steuersignalen gesteuert werden.

10. Druckmittelanlage nach wenigstens einem der vorhergehenden Patentansprüche, **dadurch gekennzeichnet**, daß die Drucksteuereinrichtungen (10, 20, 30) jeweils einen Druckmitteleingang aufweisen, der mittelbar oder unmittelbar mit einer Druckmittelversorgungseinrichtung (4) verbunden ist.

11. Druckmittelanlage nach wenigstens einem der vorhergehenden Patentansprüche, **dadurch gekennzeichnet**, daß die Drucksteuereinrichtungen (10, 20, 30) jeweils einen Drucksensor (15, 25, 35) aufweisen, der mit dem jeweiligen Druckmittelausgang verbunden ist.

12. Druckmittelanlage nach wenigstens einem der vorhergehenden Patentansprüche, gekennzeichnet durch folgende Merkmale:
a) die Absperreinrichtung bzw. die Absperreinrichtungen (40, 50) weist bzw. weisen jeweils einen elektrischen Steuerenergieeingang (42, 52) auf, der mit einer die elektrische Steuerenergie führenden Leitung (46, 56) verbunden ist,
b) das Absperrelement bzw. die Absperrelemente (41, 51) zur Druckmittelabsperrung ist bzw. sind auch mittels der elektrischen Steuerenergie betätigbar.

## Claims

1. A pressure medium system for supplying at least two pressure medium circuits with a pressure medium, having the following features:
a) a pressure control device (10, 20, 30) is present for each pressure medium circuit,
b) the pressure control devices (10, 20, 30) each have at least one electrical control energy input (12, 22, 32) and a pressure medium outlet,
c) the electrical control energy inputs (12, 22, 32) are each connected to a line (16, 26, 36 respectively) carrying an electrical control energy,
d) the lines (16, 26, 36) carrying the electrical control energy are arranged to be connected to a single source of electrical control energy,
e) the pressure medium outlets are connected to a respective one of the pressure medium drcuits (1, 2, 3),
f) at least one shut-off device (40, 50) is present,
characterised by the following features:
g) the shut-off device (40, 50) connects in each case two pressure medium circuits (1, 2, 3) on the pressure medium outlet side of the pressure control devices (10, 20, 30) associated with these pressure medium circuits (1, 2, 3),
h) the shut-off device (40, 50) has a pressure medium-operable shut-off element (41, 51) for shutting off pressure medium.

2. A pressure medium system according to claim 1, characterised by the following features:
a) one of the pressure control devices (10) is designed so that on failure of the electrical control energy it opens its pressure medium outlet,
b) all remaining pressure control devices (20, 30) are designed so that on failure of the electrical control energy they dose their pressure medium outlets,
c) the shut-off device (40, 50) connects the pressure medium circuit (1), which is connected to the pressure control device (10) that opens its pressure medium outlet on failure of the electrical control energy, to one of the remaining pressure medium circuits (2, 3).

3. Pressure medium system according to claim 2, **characterised in that** the pressure medium circuit (1) of that pressure control device (10) that opens its pressure medium outlet on failure of the electrical control energy has the lowest desired pressure of all pressure medium circuits (1, 2, 3).

4. Pressure medium system according to claim 2 or 3, **characterised in that** the shut-off element (41, 51) is moved in the shut-off direction by the pressure medium circuit (2, 3) having the higher pressure.

5. Pressure medium system according to at least one of the preceding claims, characterised by the following features:
a) at least two shut-off devices (40, 50) are present,
b) each of the shut-off devices (40, 50) connects the pressure medium circuit (1) that has the lowest desired pressure of all pressure medium circuits (1, 2, 3) with a respective one of the remaining pressure medium circuits (2, 3).

6. Pressure medium system according to at least one of the preceding claims, **characterised in that** the shut-off device or shut-off devices (40, 50) is/are controlled in the manner of a non-return valve by a pressure difference.

7. Pressure medium system according to at least one of the preceding claims, **characterised in that** as shut-off device (40, 50) there is used a non-return valve, which is connected with its output side to the pressure medium circuit (2, 3) that has the higher desired pressure.

8. Pressure medium system according to at least one of the preceding claims, **characterised in that** the shut-off element (41, 51) for shutting off pressure medium is biased in the shut-off direction with a predetermined force.

9. Pressure medium system according to at least one of the preceding claims, **characterised in that** the pressure control devices (10, 20, 30) and/or the shut-off devices or shut-off devices (40, 50) are controlled by means of electrical control signals by a centralised controlling system (5), which is arranged to the connected to the electrical control energy source via the lines (16, 26, 36, 46, 56) carrying the electrical control energy.

10. Pressure medium system according to at least one of the preceding claims, **characterised in that** the pressure control devices (10, 20, 30) each have a pressure medium inlet which is connected indirectly or directly to a pressure medium supply means (4).

11. Pressure medium system according to at least one of the preceding claims, **characterised in that** the pressure control devices (10, 20, 30) each have a pressure sensor (15, 25, 35), which is connected to the respective pressure medium outlet.

12. Pressure medium system according to at least one of the preceding claims, characterised by the following features:
a) the shut-off device or the shut-off devices (40, 50) has/have in each case an electrical control energy input (42, 52) which is connected to a line (46, 56) carrying the electrical control energy.
b) the shut-off element or the shut-off elements (41, 51) for shutting off pressure medium is/are also movable by means of the electrical control energy.

## Revendications

1. Installation à fluide sous pression pour l'alimentation en fluide sous pression d'au moins deux circuits à fluide sous pression, présentant les éléments suivants :
a) il est prévu une unité de commande de pression (10, 20, 30) pour chaque circuit à fluide sous pression,
b) les unités de commande de pression (10, 20, 30) comprennent chacune au moins une entrée d'énergie de commande électrique (12, 22, 32) et une sortie de fluide sous pression,
c) les entrées d'énergie de commande électrique (12, 22, 32) sont reliées chacune à une ligne (16, 26, 36) qui amène une énergie de commande électrique,
d) les lignes (16, 26, 36) qui amènent l'énergie de commande électrique sont susceptibles d'être reliées à une source d'énergie de commande électrique unique,
e) les sorties de fluide sous pression sont reliées à l'un des circuits à fluide sous pression respectif (1, 2, 3), et
f) il est prévu au moins un dispositif de blocage (40, 50),
caractérisée par les éléments suivants :
g) le dispositif de blocage (40, 50) relie respectivement deux circuits à fluide sous pression (1, 2, 3) sur le côté sortie de fluide sous pression des unités de commande de pression (10, 20, 30) associées à ces circuits à fluide sous pression (1, 2, 3), et
h) le dispositif de blocage (40, 50) comprend un élément de blocage (41, 51) susceptible d'être actionné par le fluide sous pression, pour le blocage du fluide sous pression.

2. Installation à fluide sous pression selon la revendication 1,
caractérisée par les éléments suivants :
a) l'une des unités de commande de pression (10) est ainsi réalisée qu'en cas de disparition de l'énergie de commande électrique, elle ouvre sa sortie à fluide sous pression,
b) toutes les autres unités de commande de pression restantes (20, 30) sont ainsi réalisées qu'en cas de disparition de l'énergie de commande électrique, elles ferment leur sortie de fluide sous pression, et
c) le dispositif de blocage (40, 50) relie le circuit à fluide sous pression (1) qui est raccordé à l'unité de commande de pression (10) qui ouvre sa sortie à fluide sous pression en cas de disparition de l'énergie de commande électrique, avec l'un des circuits à fluide sous pression restants (2, 3).

3. Installation à fluide sous pression selon la revendication 2,
**caractérisée en ce que** le circuit à fluide sous pression (1) de celle des unités de commande de pression (10) qui ouvre sa sortie à fluide sous pression en cas de disparition de l'énergie de commande électrique, présente la pression de consigne la plus faible parmi tous les circuits à fluide sous pression (1, 2, 3).

4. Installation à fluide sous pression selon l'une ou l'autre des revendications 2 et 3, **caractérisée en ce que** l'élément de blocage (41, 51) est actionné en direction de blocage par le circuit à fluide sous pression (2, 3) qui présente la pression la plus élevée.

5. Installation à fluide sous pression selon l'une au moins des revendications précédentes, caractérisée par les éléments suivants :
a) il est prévu au moins deux dispositifs de blocage (40, 50), et
b) chacun des dispositifs de blocage (40, 50) relie respectivement le circuit à fluide sous pression (1) qui présente la plus faible pression de consigne de tous les circuits à fluide sous pression (1, 2, 3), à l'un des circuits à fluide sous pression restants (2, 3).

6. Installation à fluide sous pression selon l'une au moins des revendications précédentes, **caractérisée en ce que** le ou les dispositif(s) de blocage (40, 50) est(sont) commandé(s) par une différence de pression à la manière d'un clapet anti-retour.

7. Installation à fluide sous pression selon l'une au moins des revendications précédentes, **caractérisée en ce qu**'il est prévu à titre de dispositif de blocage (40, 50) un clapet anti-retour qui est relié du côté de sa sortie avec le circuit à fluide sous pression (2, 3) qui présente la pression de consigne la plus élevée.

8. Installation à fluide sous pression selon l'une au moins des revendications précédentes, **caractérisée en ce que** l'élément de blocage (41, 51) prévu pour le blocage du fluide sous pression est chargé sous une force prédéterminée dans la direction de blocage.

9. Installation à fluide sous pression selon l'une au moins des revendications précédentes, **caractérisée en ce que** les unités de commande de pression (10, 20, 30) et/ou le ou les dispositif(s) de blocage (40, 50) sont commandés par une unité de commande centrale (5), laquelle peut être reliée à la source d'énergie de commande électrique, via les lignes (16, 26, 36, 46, 56) qui amènent l'énergie de commande électrique, au moyen de signaux de commande électriques.

10. Installation à fluide sous pression selon l'une au moins des revendications précédentes, **caractérisée en ce que** les unités de commande de pression (10, 20, 30) présentent chacune une entrée à fluide sous pression, laquelle est reliée directement ou indirectement à une unité d'alimentation en fluide sous pression (4).

11. Installation à fluide sous pression selon l'une au moins des revendications précédentes, **caractérisée en ce que** les unités de commande de pression (10, 20, 30) comprennent chacune un capteur de pression (15, 25, 35), lequel est relié à la sortie à fluide sous pression respective.

12. Installation à fluide sous pression selon l'une au moins des revendications précédentes, caractérisée par les éléments suivants
a) le ou les dispositif(s) de blocage (40, 50) comprend(comprennent) uné entrée d'énergie de commande électrique respective (42, 52), laquelle est reliée à une ligne (46, 56) qui amène l'énergie de commande électrique, et
b) le ou les élément(s) de blocage (41, 51) destiné(s) au blocage du fluide sous pression est/sont susceptible(s) d'être actionné(s) également au moyen de l'énergie de commande électrique.
